# EUROPÄISCHE PATENTSCHRIFT

(11) **EP 1 605 649 B1**
(45) Veröffentlichungstag und Bekanntmachung des Hinweises auf die Patenterteilung: **09.08.2006**
(21) Anmeldenummer: 04013014.8
(22) Anmeldetag: 02.06.2004
(51) Int. Cl.: H04L 12/58

(54) **Verfahren und Vorrichtung zum Verwalten von elektronischen Nachrichten**
Method and device for managing electronic messages
Procédé et dispositif de gestion de courrier électronique

(43) Veröffentlichungstag der Anmeldung: 14.12.2005
(73) Patentinhaber: Ixos Software AG, 85630 Grasbrunn/München (DE)
(72) Erfinder: Heiss, Franz, Dr., IXOS Software AG, 85630 Grasbrunn/München (DE); Sell, Jörg-Stefan, IXOS Software AG, 85630 GrassBrunn/München (DE); Winter, Christian, 84169 Altfraunhofen (DE)
(74) Vertreter: Betten & Resch

(56) Entgegenhaltungen:
- EP-A- 1 035 690
- US-A- 5 781 901
- US-A1- 2001 054 073
- US-A1- 2002 059 384
- US-A1- 2002 065 892

## Beschreibung

### Gebiet der Erfindung

Die vorliegende Erfindung betrifft ein Verfahren und eine Vorrichtung zum Verwalten von elektronischen Nachrichten. Insbesondere bezieht sich die Erfindung auf die speichereffiziente Archivierung von elektronischen Nachrichten die Anhänge enthalten.

### Beschreibung des Standes der Technik

Programmsysteme zum Verarbeiten von elektronischen Nachrichten, wie z.B. Emails oder anderen Nachrichtenformaten zur Versendung von Text-, Bild-, Sound- oder anderen Daten sind bekannt. Elektronische Nachrichten werden dabei zwischen Datenverarbeitungssystemen verschiedener Nutzer, die beispielsweise über ein Computer- oder ein Kommunikationsnetzwerk miteinander verbunden sind, verschickt. Die Versendung von Nachrichten kann dabei sowohl nur innerhalb eines lokalen Netzes, wie z.B. eines Intranets eines Unternehmens oder weltweit über das Internet und damit zwischen beliebigen Nutzern erfolgen, die über einen mit dem Internet verbundenen Computer verfügen. Das Standardprotokoll zum Austausch von Emails gemäß dem RFC822-Protokoll ist beschrieben in Crocker, D.H.: "Standard for the Format of ARPA Internet Text Messages", RFC822, 1982.

Das Versenden, Übertragen und Weiterleiten sowie Verteilen der elektronischen Nachrichten erfolgt dabei üblicherweise von elektronischen Nachrichtensystemen, die oftmals ebenfalls die Speicherung der Nachrichten übernehmen. Solche Nachrichtenverarbeitungssysteme zum Versenden, Empfangen und Speichern von Emails, wie z.B. Microsoft Exchange oder Lotus Notes, sind bekannt und können auf einem einzelnen Computer oder auf einem sogenannten Email-Server für mehrere Clients in einem Netzwerk installiert werden.

Elektronische Nachrichten werden dabei sowohl zwischen Email-Servern als Email-Verarbeitungssysteme ausgetauscht als auch zwischen Clients über einen Email-Server verschickt. Ein bekannter Standard zum Versenden und Empfangen von elektronischen Nachrichten bzw. elektronischer Post ("Email") zwischen einem Client und einem Email-Server ist POP3 ("Post Office Protocol Version 3"), der es dem Client erlaubt, den Email-Server zu kontaktieren, dort sein Postfach abzufragen und neue Emails in den lokalen Posteingang des Clients herunterzuladen bzw. zu versendende Emails vom lokalen Postausgang des Clients zur weiteren Versendung an den Email-Server zu schicken. Ein weiterer Standard, der als "Internet Message Access Protocol Version 4 revision 1" (IMAP4rev1) bekannt ist, unterscheidet sich vom POP3-Standard dadurch, dass Nachrichten direkt auf dem Email-Server lesbar sind, ohne dass ein Herunterladen auf den Client erforderlich wäre.

Elektronische Nachrichten wie z.B. Emails enthalten typischerweise einen Nachrichtenkopf, in dem Informationen über den Empfänger, den Absender sowie weitere Informationen enthalten sind sowie einen Nachrichtenkörper, der die eigentliche Nachricht enthält. Der Nachrichtenkörper kann dabei Dateien in üblichen Formaten sowie weitere Emails, die wiederum Dateien enthalten können, als sogenannte Dateianhänge oder Attachments enthalten. Durch die Möglichkeit von bekannten Email-Verarbeitungssystemen eine Auto-Antwort- oder Weiterleitungsfunktion bereitzustellen, bei der eine Antwortnachricht auf eine empfangene Nachricht generiert wird, bei der die empfangene Nachricht automatisch in den Nachrichtenkörper der Antwortnachricht hinein kopiert wird, entsteht das Problem kaskadierender Nachrichten, die aufgrund wiederholter Verwendung der Auto-Antwortfunktion in ihrer Größe immer weiter anwachsen und damit zunehmend ein Speicherproblem darstellen. Dadurch, dass jede elektronische Nachricht eine einzelne Datei ist und als solche einzeln abgespeichert wird, können elektronische Nachrichten auch nur als Ganzes aus dem Email-Verarbeitungssystem ausgelagert und extern gespeichert werden.

Das Problem verschärft sich, nachdem heutige Email-Verarbeitungssysteme sogenannte Postverteilungslisten (Mailing Lists wie z.B. Public Mailing Lists oder Distribution Lists) bereitstellen, über die eine elektronische Nachricht an alle in der Liste aufgeführten Empfänger automatisch verschickt wird, so dass eine Email mit identischem Inhalt z.B. an tausend Personen verschickt und aufgrund der für jeden Empfänger eigenen Metadaten, wie z.B. Empfangsadresse, Empfangszeitpunkt, etc. für den Empfänger individuell gespeichert wird und damit unter Umständen ebenfalls vielfach auf dem entsprechenden Email-Server bzw. einem entsprechendem Nachrichtenspeichersystem redundant vorhanden ist.

Aber auch, wenn ein Absender eine elektronische Nachricht mehreren Empfängern gleichzeitig zusenden möchte, können diese mehreren Empfänger einfach im Nachrichtenkopf als Adressaten in den Feldem "an" bzw. "to" oder "Kopie" bzw. "cc" eingetragen werden, woraufhin die Nachricht automatisch an alle eingetragenen Empfänger versendet und für jeden Empfänger einschließlich eventuell vorhandener Dateianhänge separat gespeichert wird.

Nachdem elektronische Nachrichten immer öfter und immer größere Dateianhänge enthalten, werden auf dem Email-Server elektronische Nachrichten gespeichert, die vielfach identische Dateianhänge enthalten, so dass sich das Speicherproblem weiter zuspitzt.

Dem damit einhergehenden größeren Speicherbedarf von Email-Servern wurde bisher nur unzureichend begegnet, indem z.B. in regelmäßigen Abständen die verwalteten Emails in ein separates Archivsystem ausgelagert wurden. Hierbei ergibt sich aber durch das notwendige Verschieben ein höherer Administrationsaufwand, insbesondere, wenn ältere Nachrichten wieder gelesen und erst vom Archivsystem wieder auf den Email-Server zurück verschoben werden müssen. Die z.B. mit der Archivierungsfunktion von Microsoft Outlook erzeugten .pst-Dateien sind voluminös und instabil, woraus sich zusätzliche Support-Probleme und steigende Kosten für das Sichern von File-Servern ergeben.

Nachdem durch das Auslagern von Nachrichten in ein Archivierungssystem die elektronischen Nachrichten wiederum als Ganzes auf einem separaten File- bzw. Archiv-Server gespeichert werden, erfolgt die Datensicherung hinsichtlich der vielfach identischen Dateianhänge wiederum redundant und erzeugt somit hohe Speicherkosten.

In der europäischen Patentanmeldung EP-A-1 035 690 wird ein Email-Archivierungssystem vorgestellt, in dem elektronische Nachrichten in einem Nachrichtenarchiv mit einem Client-Identifizierer und einem Archivtoken gespeichert werden, um einen selektiven und strukturierten Zugriff auf archivierte Nachrichten zu ermöglichen. Das vorgestellte Archivsystem schlägt dabei jedoch keine Lösung vor, wie das redundante Speichern von identischen Dateianhängen in einer Vielzahl von gespeicherten Nachrichten vermieden werden kann.

In der US 2002/0065892 A1 wird eine Verfahren und eine Vorrichtung zur Verringerung des Speicherbedarfs von gemeinsamen Dateianhängen in einem E-Mail-Kommunikationsserver offenbart. Das E-Mail Kommunikationssystem verringert dabei die Anzahl duplizierter Kopien gemeinsamer Dateianhänge von E-Mail Nachrichten, die auf einem Postspeicher eines E-Mail-Servers gespeichert sind. Wenn der E-Mail-Server einen E-Mail-Dateianhang empfängt, der eine Größe aufweist, die größer als eine bestimmte Schwellwertgröße ist, führt der Server eine Datenbanksuche nach einer weiteren Kopie des Dateianhangs in dem Postspeicher durch. Wenn eine weitere Kopie lokalisiert wird, wird der Dateianhang von der E-Mail-Nachricht entfernt und eine Verknüpfung zwischen dem zuvor gespeicherten Dateianhang in der Datenbank kreiert. Nachdem die Suche nach Duplikaten zu einem Dateianhang in der Datenbank zeit- bzw. ressourcenintensiv ist, erfolgt die Suche nach Duplikaten und Weiterverarbeitung jedoch nur, wenn die vorherige Überprüfung ergeben hat, daß der Dateianhang eine bestimmte Dateigröße überschritten hat. Wenn dann die Überprüfung nach Duplikaten ergibt, daß der Dateianhang bereits im Postspeicher gespeichert ist, wird, wenn erforderlich, der Dateianhang in einen Cache-Abschnitt des Postspeichers transferiert, ein Datensatz für die E-Mail-Nachricht kreiert und eine Verknüpfung zu dem in den Cache-Abschnitt transferrierten Dateianhang hergestellt. Die entsprechenden Verknüpfungen in den Datensätzen anderer E-Mail-Nachrichten, die ebenfalls auf diesen Dateianhang verweisen, werden daraufhin entsprechend geändert, um die Umspeicherung des Dateianhangs in den Cache-Abschnitt zu berücksichtigen.

Es ist daher eine Aufgabe der vorliegenden Erfindung, ein Verfahren und ein System bereitzustellen, bei denen die Nachteile des Standes der Technik vermieden oder zumindest vermindert werden, und die es insbesondere ermöglichen, den Speicherbedarf bei der Verwaltung, Speicherung und/oder Archivierung von elektronischen Nachrichten zu verringern.

### ZUSAMMENFASSUNG DER ERFINDUNG

Gemäß einem Aspekt der vorliegenden Erfindung wird ein Verfahren und ein System der eingangs genannten Art , wie in den Patentansprüchen 1 und 12 definiert, bereitgestellt.

Ein Verfahren zum speichereffizienten Verwalten von elektronischen Nachrichten gemäß einem Aspekt der Erfindung beinhaltet zunächst das Empfangen bzw. Lesen einer von einem System wie z.B. einem Email-Server zu verwaltenden Nachricht. Die zu verwaltende Nachricht wird analysiert und dabei in ein Grundgerüst und in die in der Nachricht enthaltenen Dateianhänge zerlegt. Für jeden Dateianhang wird ein eindeutiger Identifikationswert berechnet und die Dateianhänge der zerlegten Nachricht werden nun jeweils einzeln gespeichert, wobei zunächst geprüft wird, ob zu einem Identifikationswert bereits eine Datei im Speicher existiert. Für den Fall, dass keine Datei mit dem neu berechneten Identifikationswert im Speicher existiert, wird die neue Datei mit ihrem Identifikationswert gespeichert. Für den Fall, dass bereits eine Datei mit dem berechneten Identifikationswert im Speicher existiert, wird die Datei nicht noch einmal neu gespeichert, sondern nur ein Verweis auf die bereits existierende identische Datei angelegt. Das verbleibende Grundgerüst mit dem Nachrichtenkopf enthält nunmehr keine Dateianhänge mehr, sondern nur noch Verweise auf die als separate Dateien gespeicherten Dateianhänge und wird als solches bzw. als Kerndatei der Nachricht ebenfalls gespeichert.

Durch das Zerlegen der elektronischen Nachricht in ihre Bestandteile, wie Grundgerüst und Dateianhänge, wird es ermöglicht, die Redundanz bei der Speicherung elektronischer Nachrichten deutlich zu vermindern, indem jeder Bestandteil, wie ein Dateianhang, nur einmal abgespeichert wird und das verbleibende Grundgerüst der Nachricht lediglich Verweise auf die in der ursprünglichen Nachricht enthaltenen Dateianhänge enthält. Der zu jedem Dateianhang berechnete eindeutige Identifikationswert ermöglicht es, die Dateianhänge eindeutig zu identifizieren und zu verwalten, wobei dieser Identifikationswert entweder mit der Datei oder separat von dieser, z.B. in einer Zuordnungstabelle, gespeichert ist.

Die Erfindung stellt gemäß einem weiteren Aspekt weiterhin ein System zum speichereffizienten Verwalten von elektronischen Nachrichten bereit, das einen Archiv-Server mit einem Nachrichten-Auslagerungs-Modul, einem Identifikationswert-Berechnungs-Modul und einem Referenzzähler-Verwaltungs-Modul umfasst. Das Nachrichten-Auslagerungs-Modul trennt eine auf dem Server empfangene Nachricht in das Grundgerüst der Nachricht und die in der Nachricht enthaltenen Dateianhänge auf. Das Grundgerüst mit Verweisen auf die in der Nachricht enthaltenen Dateianhänge werden daraufhin separat in einem Speicher gespeichert. Die Dateianhänge werden auf den Archiv-Server verschoben und für jeden Dateianhang berechnet das Identifikationswert-Berechnungs-Modul einen eindeutigen Identifikationswert und, wenn dieser Identifikationswert bisher noch nicht vergeben wurde, wird der Dateianhang in dem Speicher mit dem berechneten Identifikationswert gespeichert, ansonsten, wenn im Speicher bereits eine Datei mit dem berechneten Identifikationswert existiert, wird der Dateianhang nicht erneut gespeichert, sondern das Referenzzähler-Verwaltungs-Modul inkrementiert den Referenzzähler der existierenden Datei.

Ein Nachrichten-Client gemäß einem weiteren Anspekt der Erfindung, der mit dem System zum speichereffizienten Verwalten von elektronischen Nachrichten verbindbar ist, umfasst einen Prozessor, einen Speicher, einen Bildschirm, zumindest ein Eingabegerät und ein Nachrichten-Client-Modul, das es einem Benutzer mit Hilfe des Eingabegeräts in Zusammenwirkung mit einem Prozessor ermöglicht, Nachrichten vom Nachrichtenserver in einer Benutzeroberfläche (GUI) des Nachrichten-Client-Moduls aufzurufen, am Bildschirm darzustellen sowie speichereffizient auf dem Archiv-Server zu speichern.

Gemäß einem anderen Aspekt der vorliegenden Erfindung werden Emails als elektronische Nachrichten von einem System, insbesondere einem Archiv-Server, verwaltet, wobei mittels von auf dem Archiv-Server installierten Programm-Modulen ankommende Emails gelesen, auf ihre Bestandteile analysiert und Dateianhänge herausgelöst werden. Gemäß einem weiteren Aspekt der Erfindung werden dabei Dateianhänge, die wiederum eine elektronische Nachricht sind oder in anderer Weise wiederum Dateianhänge enthalten, ebenfalls analysiert und möglicherweise enthaltene Dateianhänge herausgelöst. Das Analysieren und Herauslösen erfolgt dabei rekursiv bis sämtliche Bestandteile einer elektronischen Nachricht herausgelöst sind. Die zunächst als eine Datei mit z.B. der Suffixangabe .eml oder .msg vorliegende elektronische Nachricht wird daher in ein Grundgerüst bzw. eine Kerndatei, die Verweise auf die ihr zugeordneten Nachrichten bzw. Dateianhänge enthält, und die entsprechenden vorher enthaltenen Nachrichten und Dateianhänge aufgespalten, wobei enthaltene Nachrichten ebenfalls in ein Grundgerüst und die jeweils enthaltenen Dateianhänge aufgespalten werden. Die herausgelösten Dateianhänge werden nun an ein Speichersystem übergeben. Bevorzugter Weise werden die Dateianhänge dabei einzeln an das Speichersystem übergeben und beim Eingang eines Dateianhangs in das Speichersystem errechnet das Identifikationswert-Berechnungs-Modul zu jedem übergebenen Dateianhang einen einzigartigen Identifikationswert und weist diesen Identifikationswert dem Dateianhang zu. Weiterhin überprüft das System, ob ein neu berechneter Identifikationswert bereits existiert. Hierzu werden gemäß einem Aspekt der Erfindung sämtliche Identifikationswerte von bereits im System gespeicherten Dateianhängen in einer Zuordnungstabelle oder einer Identifikationswert-Datenbank gespeichert. Nachdem der Identifikationswert für ein an das Speicher- bzw. Archiv-System bzw. den Archiv-Server übergebenen Dateianhang bereits in der Identifikationswert-Datenbank existiert, wird der Dateianhang nicht erneut als Datei auf dem Archiv-Server gespeichert, sondern es wird nur ein Verweis auf die entsprechende, bereits existierende Datei gespeichert.

Gemäß einem weiteren Aspekt der Erfindung erfolgt der spätere Zugriff auf eine mit Hilfe des Systems verwaltete elektronische Nachricht, indem zunächst die Kerndatei bzw. das Grundgerüst mit Verweisen von einem Programm-Modul gelesen und die enthaltenen Verweise auf die separat gespeicherten Dateien durch diese Dateien ersetzt und wiederum als Dateianhänge innerhalb der Kerndatei gespeichert werden, so dass die ursprüngliche Nachricht wiederhergestellt ist.

Ein weiterer Aspekt der Erfindung betrifft die Rekonstruktion von elektronischen Nachrichten, die zuvor durch Zerlegung in ihre Bestandteile und deren separates Speichern verwaltet bzw. archiviert worden sind bzw. von Nachrichten, die in einem zum Rekonstruieren gemäß dem hier geschilderten Verfahren geeigneten Format vorliegen. Zunächst wird das Grundgerüst der Nachricht gelesen, die Dateien, auf die die Verweise im Grundgerüst anhand der in den Verweisen gespeicherten Identifikationswerte verweisen, aus dem Speicher geladen und die Verweise durch die Dateien als die Dateianhänge der zu rekonstruierenden Nachricht ersetzt.

Vorteilhafterweise wird jedes Mal, wenn ein Verweis in einem Grundgerüst durch die entsprechende Datei beim Rekonstruieren einer elektronischen Nachricht ersetzt wird, durch das Referenzzähler-Verwaltungs-Modul der Referenzzähler dieser Datei nur dann dekrementiert, wenn die Nachricht vom System gelöscht wird. Wird eine Nachricht nur deshalb rekonstruiert, weil sie z.B. zur Anzeige gebracht werden soll, wird der entsprechende Referenzzähler nicht dekrementiert und beim Beenden der Anzeige erfolgt dann zweckmäßigerweise auch keine erneute Speicherung der Nachricht im System. Wenn der Referenzzähler einer Datei einen Wert geringer als seinen Initialisierungswert erreicht, wird die Datei vom Archiv-Server gelöscht, so dass Dateianhänge von nicht mehr vom System verwalteten Nachrichten auch vom Archiv-Server wieder entfernt werden.

Die Vorteile der geschilderten Verfahren und Systeme zum speichereffizienten Verwalten von elektronischen Nachrichten liegen auf der Hand. Dateien, die bisher als Dateianhänge in Nachrichten nicht separat zugreifbar waren, können nun aus den Nachrichten herausgelöst und separat verwaltet und gespeichert werden, wobei jederzeit die ursprüngliche Nachricht wieder zusammengefügt werden kann.

Der Speicherbedarf zum Speichern von elektronischen Nachrichten wird deutlich reduziert, indem einzelne Dateianhänge nur noch einmal gespeichert werden, nachdem mittels des Identifikationswertes leicht feststellbar ist, ob der Dateianhang bereits im System gespeichert ist, so dass weitere Instanzen der Datei nicht erneut gespeichert werden müssen. Statt dessen wird auf die bereits existierende Instanz verwiesen.

Gemäß einem Ausführungsbeispiel wird der Identifikationswert als Hashwert mit einem sogenannten Hash-Algorithmus erzeugt. Beispielsweise steht dafür in der Programmiersprache Java die Methode "hashCode ()" zur Verfügung, die einen Hashwert der angegebenen Datei erzeugt. Anstatt eines Hash-Algorithmus können alternativ auch andere Algorithmen, wie z.B. Prüfsummenbildungsalgorithmen (CRC) verwendet werden, um die Eindeutigkeit eines Dateianhangs festzustellen. Es ist dabei bevorzugt, Algorithmen zu verwenden, die die Eindeutigkeit der Dateien nicht nur anhand des Dateinamens, sondern der gesamten Datensätze der Dateien ermitteln, da mit elektronischen Nachrichten oft Dateianhänge versendet werden, die identische Dateinamen haben oder sich nur geringfügig, z.B. als unterschiedliche Versionen eines Dokuments, unterscheiden, jedoch im System als unterschiedliche Dateien abzuspeichem sind.

Ein weiterer Vorteil der vorliegenden Erfindung betrifft die Möglichkeit, durch die vorgestellten Verfahren elektronische Nachrichten oder andere Dateien, die wiederum Dateien enthalten, feiner zu strukturieren, indem die Nachrichten bzw. Dateien jeweils in ihre einzelnen Bestandteile rekursiv zerlegbar sind. Somit ist es z.B. bei der Suche von bestimmten Zeichenketten in den vom Server verwalteten Nachrichten möglich, Suchmaschinentreffer dieser Zeichenketten einzelnen Dateianhängen zuzuordnen und diese selektiv anzuzeigen, anstatt nur die Nachricht bzw. Gesamt-Datei, die unter Umständen viele Anhänge enthält, als Treffer anzuzeigen.

Das erfindungsgemäße Auflösen und der Zusammenbau von elektronischen Nachrichten bzw. das Herauslösen von in elektronischen Nachrichten enthaltenen Dateianhängen erfolgt vorteilhafterweise mit Programm-Modulen, die im Serversystem, z.B. dem Email-Server, integriert sind und auf dessen Funktionalität zurückgreifen, so dass die durch die Erfindung bereitgestellte Funktionalität einfach bestehenden Systemen hinzugefügt werden kann.

Durch die Erfindung wird weiterhin erreicht, dass die verfügbaren einzelnen Bestandteile einer elektronischen Nachricht jeweils nur einmal im Archiv-System gespeichert werden, indem Dubletten anhand desselben Identifikationswertes identifizierbar sind und somit eine mehrfache Speicherung vermieden wird.

Gemäß einem Ausführungsbeispiel wird der in dem Grundgerüst bzw. der Kerndatei verbleibende Textbestandteil ebenfalls als separate Datei ausgelagert und als eindeutig identifizierbare Datei auf dem Archiv-Server gespeichert, so dass das Grundgerüst bzw. die Kerndatei nur noch aus dem Nachrichtenkopf und Verweisen, daher zumindest dem Verweis auf die Datei mit dem Textkörper der Nachricht besteht. Damit können alle Daten einer Kerndatei bzw. eines Grundgerüstes einschließlich der Verweise auf die ausgelösten Dateianhänge in einer ausgelagerten Datenstruktur, z.B. in einer externen Datenbank oder in Objekten im Speicher des Archiv-Servers gehalten werden.

Durch das bereitgestellte Verfahren bzw. System wird die Administration eines Email-Servers spürbar vereinfacht und gestaltet sich ebenfalls kostengünstiger. Die auf einem Nachrichten- bzw. Email-Server verbleibenden Verweisdateien auf die Grundgerüste der Nachrichten sind typischerweise nur noch ca. 0,2 bis 1 KB groß, so dass selbst Mailboxen mit einer relativ geringen Speicherkapazität eine große Menge von Nachrichten verwalten können. Zudem wird es ermöglicht, dass wesentlich mehr Mailboxen auf einem Email-Server abgelegt werden können und sich somit Hard- und Software einsparen lassen. Auch das Einspielen von Backups, das Wiederherstellen der Daten sowie die Migration auf neue Email-Server werden einfacher und kostengünstiger.

Die vorliegende Erfindung ist weiterhin vorteilhaft für das sichere Archivieren von Dokumenten, insbesondere nachdem zunehmend gesetzliche Anforderungen an Aufbewahrungsfristen und Archivierungsstandards für elektronische Dokumente gestellt, und diese gemäß diversen Regelungen (SEC-Regeln, GoBSm GDPdU oder des Sarbanes-Oxley Act) rechtlich Papierdokumenten gleichgesetzt werden. Mit Hilfe der vorliegenden Erfindung lassen sich elektronische Nachrichten einfacher, nicht redundant und mit statistischen Informationen in z.B. nicht löschbaren Formaten ablegen. Durch die Auswertung der Referenzzähler für einzelne Dateianhänge lassen sich dabei leicht statistische Auswertungen hinsichtlich der Verwendung von bestimmten Dokumenten ableiten.

Gemäß einem weiteren Ausführungsbeispiel kann auf die Rekonstruktion der Nachricht verzichtet werden, wenn z.B. die Nachricht vom System im Weiteren als Gruppe von aufeinander verweisenden Dateien verarbeitet wird.

Die vorliegende Erfindung stellt weiterhin ein Computerprogramm und ein Computerprogrammprodukt bereit.

### KURZE BESCHREIBUNG DER ZEICHNUNGEN

Weitere vorteilhafte Ausführungsformen und Aspekte der vorliegenden Erfindung ergeben sich aus den nachfolgend beschriebenen Figuren, den anschließend beschriebenen Ausführungsbeispielen sowie den Unteransprüchen. Die Ausführungsbeispiele werden anhand der beigefügten Zeichnungen erläutert.
- Figur 1: zeigt beispielhaft ein Blockdiagramm eines verteilten Datenverarbeitungssystems, in dem ein System gemäß der vorliegenden Erfindung implementierbar ist;
- Figur 2: ist ein Blockdiagramm eines Nachrichten-Clients gemäß der vorliegenden Erfindung;
- Figur 3: ist ein Blockdiagramm eines Nachrichten-Servers gemäß der vorliegenden Erfindung;
- Figur 4: ist ein Blockdiagramm eines Archiv-Servers gemäß der vorliegenden Erfindung;
- Figur 5a: illustriert schematisch eine elektronische Nachricht, die Dateianhänge sowie eine weitere elektronische Nachricht enthält, die wiederum Dateianhänge enthält;
- Figur 5b: illustriert schematisch die Nachricht aus Figur 5a, aus er die Dateianhänge sowie die wiederum enthaltene Nachricht herausgelöst sind;
- Figur 5c: illustriert schematisch die elektronische Nachricht aus Figur 5a bzw. 5b, bei der aus der herausgelösten Nachricht die Dateianhänge ebenfalls herausgelöst worden sind;
- Figur 6: illustriert schematisch Nachrichtengrundgerüste sowie deren Verweise auf die herausgelösten Dateien einschließlich deren Identifikationswertes und Präferenzzählers;
- Figur 7: ist ein Ablaufdiagramm eines Verfahrens gemäß einer Ausführungsform gemäß der vorliegenden Erfindung;
- Figur 8: ist ein Ablaufdiagramm eines Verfahrens gemäß einer weiteren Ausführungsform der Erfindung;
- Figur 9: ist ein Ablaufdiagramm eines Verfahrens gemäß einer weiteren Ausführungsform der Erfindung;
- Figur 10: zeigt eine graphische Benutzeroberfläche eines Nachrichten-Client-Moduls im Zusammenhang mit einer Ausführungsform der Erfindung.

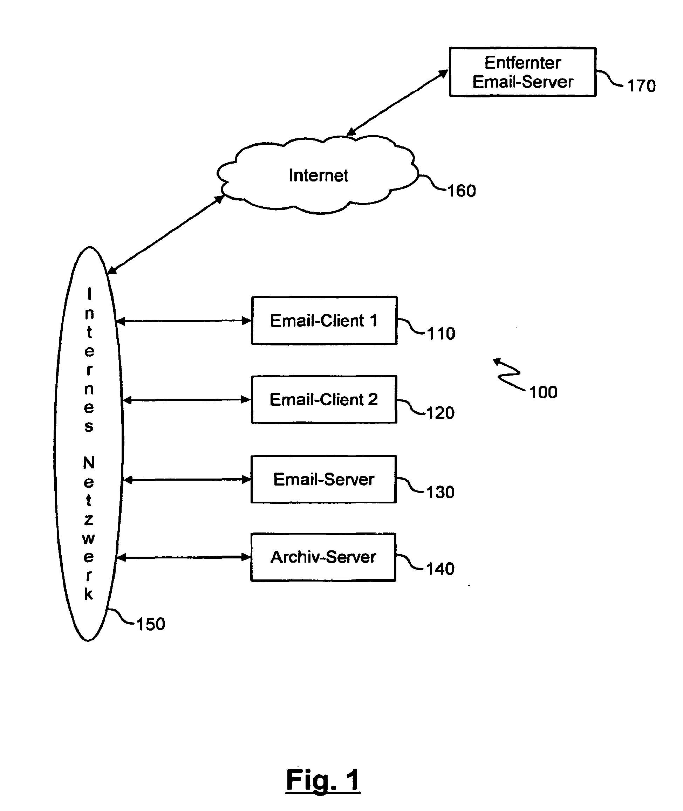

Figur 1 zeigt schematisch ein Blockdiagramm eines verteilten Datenverarbeitungssystems 100, das geeignet ist, Ausführungsformen der Erfindung zu implementieren. In dem Datenverarbeitungssystem 100 sind über ein internes Netzwerk (Intranet) 150 Nachrichten-Clients (Email-Client 1, Email-Client 2) 110, 120, ein Nachrichtenserver (Email-Server) 130 und ein Archiv-Server 140 miteinander verbunden. Das interne Netzwerk 150 kann dabei als LAN, WLAN oder ein anderes Kommunikationsnetzwerk ausgeführt sein, das es ermöglicht, zwischen den Servern und Clients Nachrichten z.B. in Form von Datenpaketen auszutauschen. In der Praxis werden nicht nur zwei Clients über das Netzwerk mit den Servern verbunden sein, vielmehr wird eine viel größere Anzahl, beispielsweise entsprechend der Anzahl von Mitarbeitern in einer Firma, über das Netzwerk mit den Servern und den jeweils anderen Clients verbunden sein, um über das Netzwerk mit Hilfe des Email-Servers elektronische Nachrichten auszutauschen, einschließlich Nachrichten zu versenden, zu verwalten und zu empfangen.

Gemäß Figur 1 ist ein Datenaustausch ebenfalls mit entfernten Benutzern, die über einen entfernten Email-Server 170 über das Internet 160 mit dem internen Netzwerk 150 verbunden sind, entsprechend gegeben.

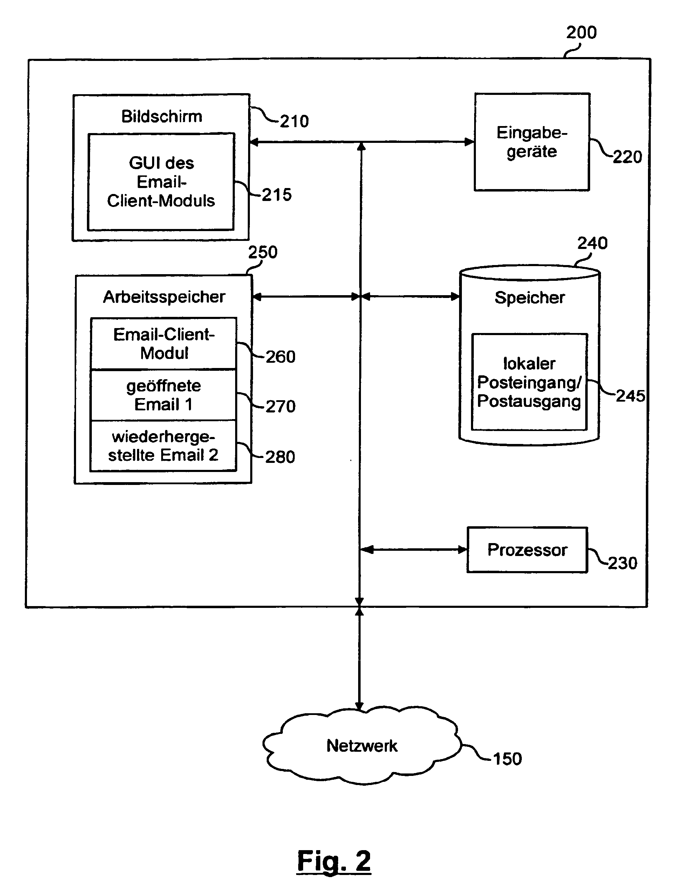

Figur 2 zeigt schematisch ein detaillierteres Blockschaltbild 200 eines mit dem Netzwerk 150 verbundenen Nachrichten-Client 110, 120. Der Nachrichten-Client 200 ist dabei üblicherweise ein Computer, Terminal, oder auch ein sogenannter Thin-Client und verfügt in der Ausstattung als Computer über einen Prozessor 230, einen Bildschirm 210, zumindest ein Eingabegerät 220, vorzugsweise einen Speicher 240 sowie einen Arbeitsspeicher 250. Zum Versenden, Verarbeiten und Empfangen von elektronischen Nachrichten, wie z.B. Emails, ist im Arbeitsspeicher 250 ein Email-Client-Modul ausführbar gespeichert, dessen Benutzeroberfläche (GUI = Graphical User Interface) 215 auf dem Bildschirm 210 zur Anzeige gebracht wird und mit Hilfe des Prozessors 230 die lokale Verarbeitung der elektronischen Nachrichten ermöglicht. Gemäß einer Ausführungsform der Erfindung ist in dem Speicher 240 ein lokaler Posteingang/Postausgang (Mailbox) 245 gespeichert, der insbesondere zum Einsatz kommt, wenn gemäß dem POP3-Standard ein Nachrichtenaustausch mit dem Email-Server 130 erfolgt.

Im Arbeitsspeicher 250 befinden sich weiterhin exemplarisch eine empfangene und geöffnete Email 270 sowie eine rekonstruierte bzw. wiederhergestellte Email 280, die jeweils im GUI 215 darstellbar sind.

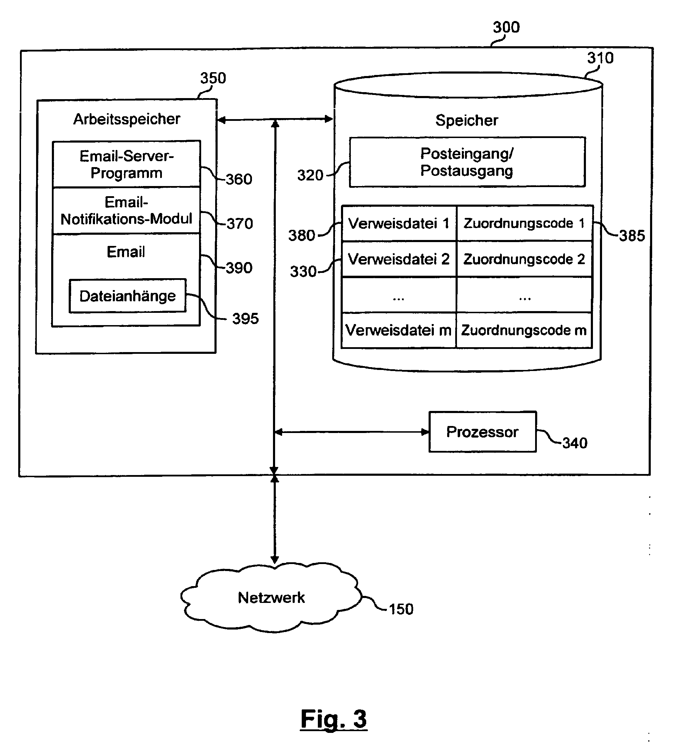

Figur 3 zeigt schematisch ein detaillierteres Blockdiagramm 300 des Email-Servers 130, der mit dem Netzwerk 150 verbunden ist. Der Email-Server 300 verfügt über einen Speicher bzw. eine Datenbank 310 zum Speichern der vom Email-Server zu verwaltenden elektronischen Nachrichten im Posteingang/Postausgang (Mailbox) 320, sowie einen Prozessor 340 und einen Arbeitsspeicher 350. Im Arbeitsspeicher ist ein Email-Server-Programm (Email-Verwaltungsprograrnm), wie z.B. Microsoft Exchange oder Lotus Notes, zumindest teilweise ausführbar gespeichert, das mit Hilfe des Prozessors 340 die elektronischen Nachrichten verwaltet. Im Arbeitsspeicher 350 befinden sich ebenfalls ein Email-Notifikations-Modul 370. Weiterhin zeigt Figur 3 exemplarisch eine aktuell zu verwaltende Nachricht (Email) 390 mit Dateianhängen 395.

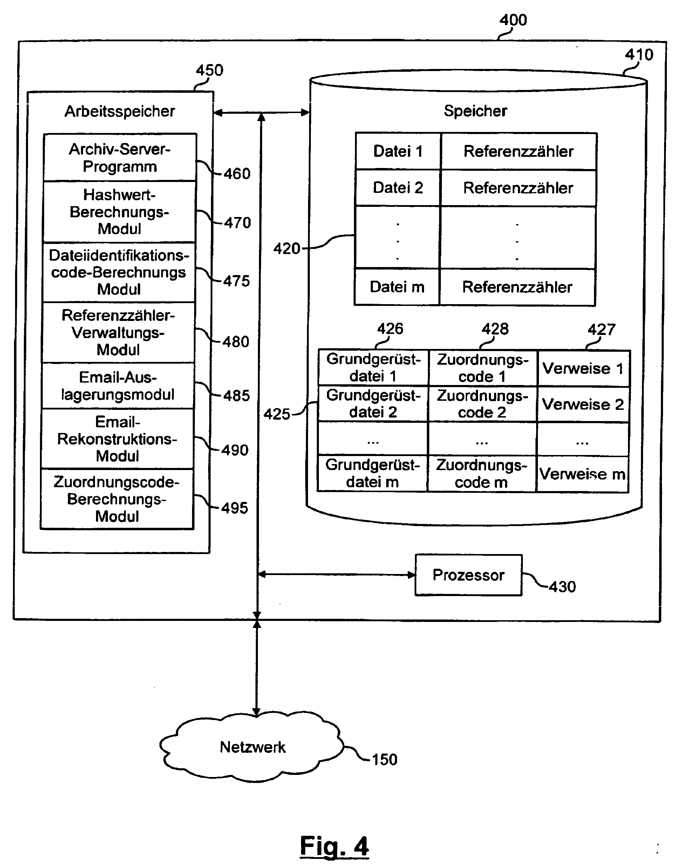

Figur 4 zeigt schematisch ein detaillierteres Blockdiagramm 400 des Archiv-Servers 140, der mit dem Netzwerk 150 verbunden ist und über ebenfalls einen Prozessor 430, einen Speicher bzw. eine Datenbank 410 zum Speichern und Archivieren von elektronischen Nachrichten und einen Arbeitsspeicher 450, in dem zumindest Teile eines ausführbaren Archiv-Server-Programms 460 sowie ein Identifikationswert-Berechnungs-Modul (Hashwert-Berechnungsmodul) 470, ein Referenzzähler Verwaltungs-Modul 480, ein Email-Auslagerungsmodul 485, ein Email-Rekonstruktionsmodul 490 sowie ein Zuordnungscode-Berechnungs-Modul 495 exemplarisch gespeichert sind. Die jeweiligen Module werden bevorzugter Weise nur dann in den Speicher geladen, wenn ihre Funktionalität benötigt wird.

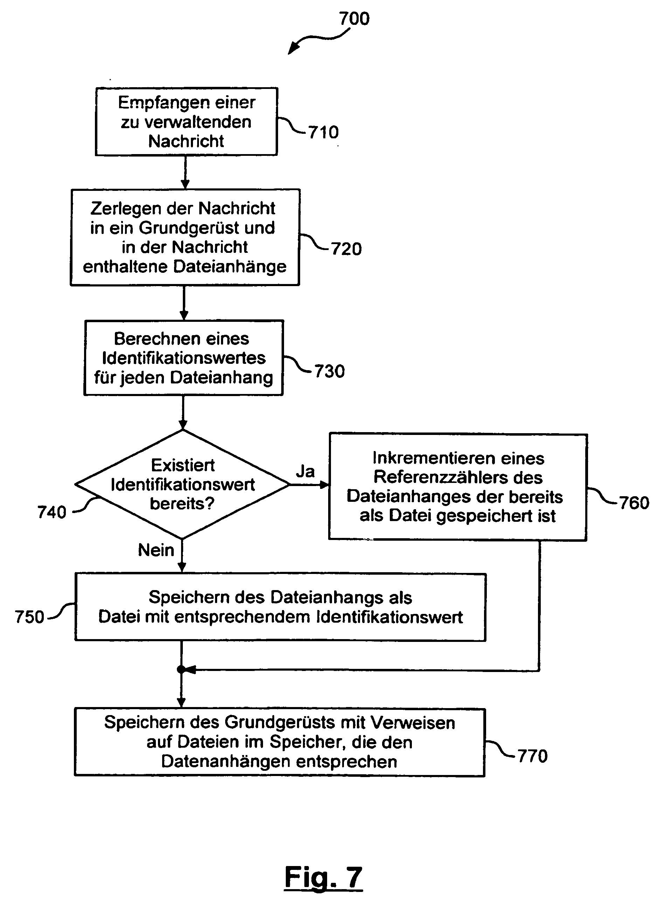

Mit Bezug auf Figur 7, die ein Ablaufdiagramm eines Verfahrens gemäß der vorliegenden Erfindung darstellt, wird nun ein Verfahren zum speichereffizienten Verwalten von elektronischen Nachrichten erläutert.

Das Verfahren 700 zum speichereffizienten Verwalten von elektronischen Nachrichten (Emails) läuft prinzipiell wie folgt erläutert ab. Eine zu verwaltende Nachricht 270, die beispielsweise im Client 200 geöffnet ist, soll gemäß Benutzereingabe über das Eingabegerät 220 speichereffizient verwaltet bzw. archiviert werden. Eine speichereffiziente Verwaltung kann ebenfalls auch ohne Benutzereingabe bzw. Interaktion eines Clients 200 z.B. durch hinterlegte Regeln und automatische zyklische Prüfung des Servers durchgeführt werden. Die Email wird vom Email-Server gelesen bzw. zu diesem gesendet und empfangen (Schritt 710) und zunächst im Arbeitsspeicher 350 als Email 390 gespeichert. Über das Email-Notifikations-Modul 370 wird der Archiv-Server 400 über das Vorhandensein einer zu verwaltenden Email informiert. Das Email-Auslagerungsmodul 485 veranlaßt daraufhin die Verschiebung der Email auf den Archiv-Server und zerlegt die Nachricht in ihr Grundgerüst sowie die in der Nachricht enthaltenen Dateianhänge (Schritt 720). Das Grundgerüst enspricht dabei vorzugsweise der Kerndatei der Email mit dem Nachrichtenkopf und dem unmittelbaren Text im Nachrichtenkörper. Die aus der Email herausgelösten Dateien, die vorher als Dateianhänge 395 in der Email enthalten waren, werden nun, bevorzugterweise einzeln, in ein Speichersystem verschoben. Das Speichersysterm ist dabei bevorzugt ein Speicher 410 des Archiv-Servers oder ein separater File-Server. Das Hashwert-Berechnungs-Modul 470 berechnet für jeden Dateianhang einen eindeutigen Hashwert als Identifikationswert für diesen Dateianhang (Schritt 730). Als nächstes wird in Schritt 740 überprüft, ob ein solcher Identifikationswert bereits im Speicher 410 existiert und damit eine identische Datei bereits vom Archiv-Server gespeichert wurde. Wenn dies nicht der Fall ist, wird zu Schritt 750 verzweigt, und der Dateianhang wird als Datei erstmalig im Speicher des Archiv-Servers gespeichert. Wenn ein identischer Identifikationswert bereits existiert, wird zu Schritt 760 verzweigt, in dem lediglich das Referenzzähler-Verwaltungsmodul 480 den Referenzzähler des Dateianhangs mit dem identischen Identifikationswert inkrementiert, ohne jedoch den Dateianhang erneut als Datei auf dem Archiv-Server zu speichern. Gemäß einem Ausführungsbeispiel enthält der Speicher 410 dabei eine Zuordnungstabelle 420, in der jeder gespeicherten Datei ein entsprechender Referenzzähler zugeordnet ist und dessen Wert anzeigt, wie oft in verwalteten Emails auf die Datei als Dateianhang verwiesen wird. Der Wert des Referenzzählers kann daher statistisch ausgewertet werden, um im einfachsten Fall anzuzeigen, wie oft in den verwalteten Emails eine bestimmte Datei als Dateianhang enthalten ist.

Nachdem alle Dateianhänge, die aus der Email herausgelöst wurden, vom Archiv-Server-Programm 460 und seinen Modulen verarbeitet wurden, wird das verbleibende Grundgerüst der Email mit den Verweisen auf die Dateien im Speichersystem. 410, die den ursprünglichen Dateianhängen entsprechen, ebenfalls im Speicher des Archiv-Servers als Grundgerüstdatei 426 mit Verweis 427 gespeichert.

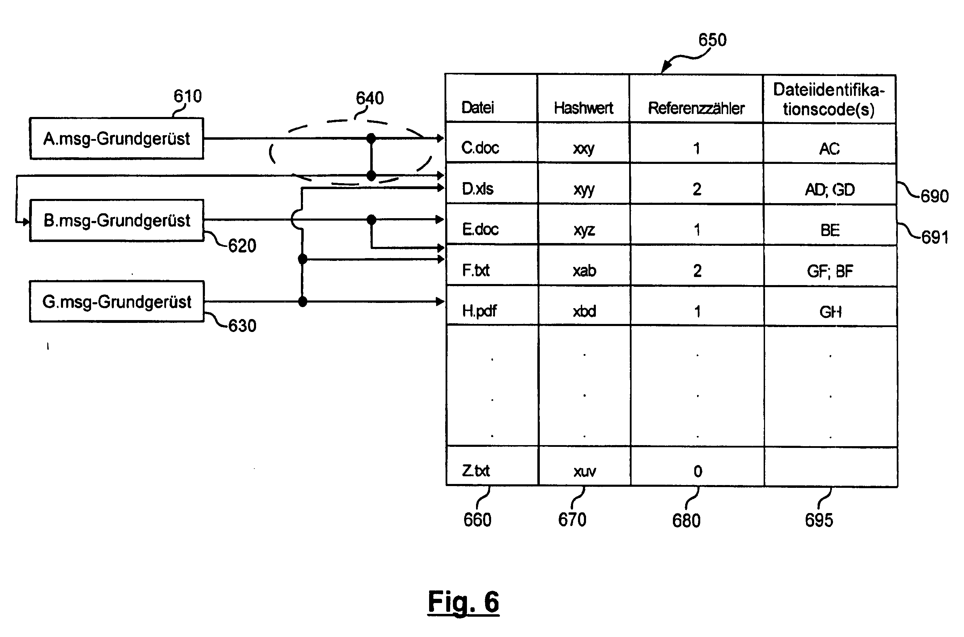

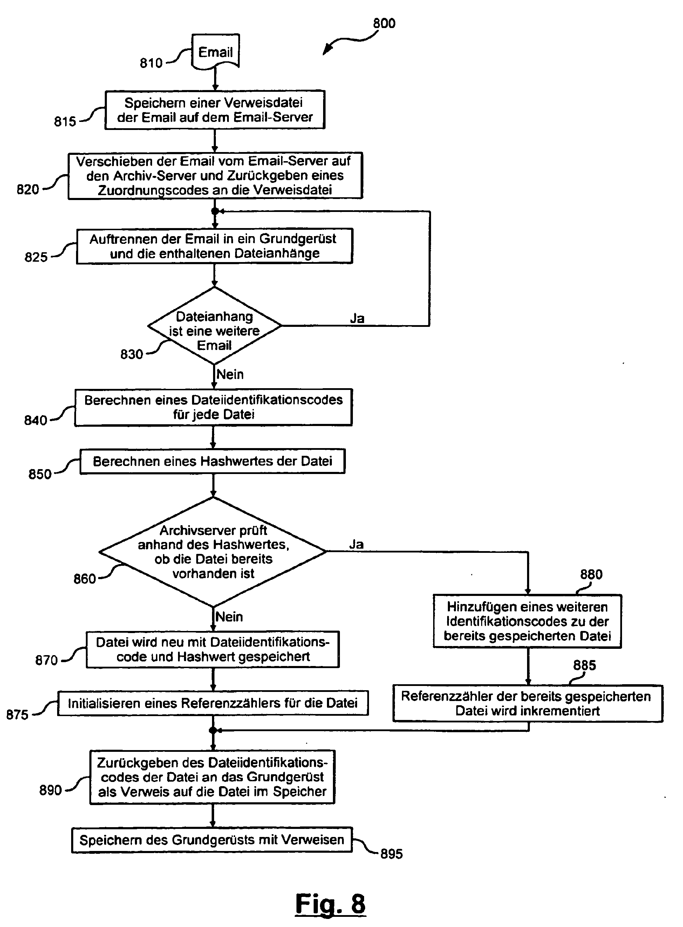

Gemäß einer bevorzugten Ausführungsform sind auf dem Email-Server 300 keine Module des Archiv-Servers installiert, da zur Wahrung der Stabilität des Email-Servers auf diesem keine zusätzlichen Module vorhanden sein sollten. Für die Implementierung des Email-Notifikations-Moduls 370 wird daher auf entsprechende Funktionalitäten des Email-Server-Programms 360 zurückgegriffen, um den Eingang neuer Emails zu melden bzw. regelmäßig abzufragen.
Ein detaillierteres Ablaufdiagramm eines Verfahrens 800 zum speichereffizienten Verwalten von Emails ist in Figur 8 dargestellt und soll nun unter weiterer Bezugnahme auf die Figuren 5a bis 5c und 6 erläutert werden.

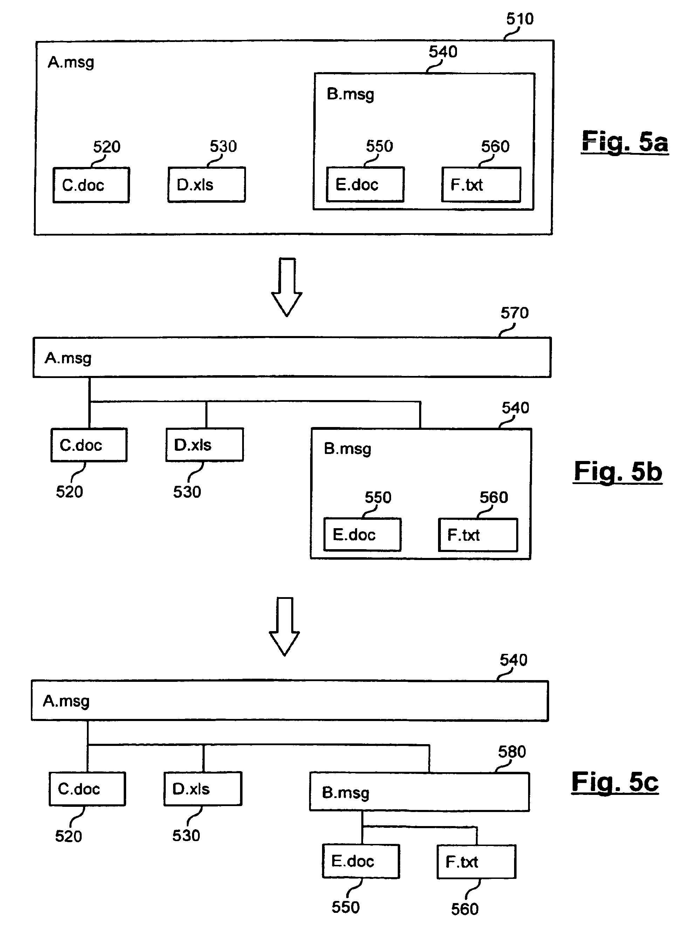

Ausgangspunkt ist in Schritt 810 eine Email A.msg 510, die mehrere Dateianhänge (Worddokument C.doc und Exceldatei D.xls) 520, 530 sowie eine weitere Email (B.msg) 540 enthält, die wiederum Dateianhänge (Worddokument E.doc und Textdokument F.txt) 550, 560 enthält (Fig. 5a). Nachdem das Email-Notifikations-Modul 370 dem Archiv-Server-Programm 460 signalisiert hat, dass eine zu verwaltende Email 510 auf dem Email-Server liegt, wird diese Email durch eine Verweisdatei 380 ersetzt, die zunächst Informationen wie Adressat, Absender, Betreff, etc. der zu verwaltenden Email enthält. In einem nächsten Schritt 820 wird die Email nun auf dem Archiv-Server 400 verschoben. In Schritt 825 wird die Email 510 vom Email-Auslagerungs-Modul 485 zunächst in ein Grundgerüst 570 sowie die Dateianhänge C.doc 520, D.xls 530 und die herausgelöste Email B.msg 540 aufgetrennt (Fig. 5b). In einem nächsten Schritt 830 wird überprüft, ob zumindest einer der herausgelösten Dateianhänge wiederum eine Email mit möglicherweise weiteren Dateianhängen ist. Im vorliegenden Fall ist eine solche weitere Email, nämlich die Datei B.msg 540 als Dateianhang vorhanden, so dass von Schritt 830 zurück zu Schritt 825 verzweigt wird und in erneuter Ausführung des Schrittes 825 auch die Email B.msg in ein Grundgerüst 580 sowie die Dateianhänge E.doc 550 und F.txt 560 aufgetrennt wird (Figur 5c). Bei erneuter Überprüfung in Schritt 830 wird festgestellt, dass keine weitere Email als Dateianhang vorhanden ist, so dass zu Schritt 840 verzweigt wird. In Schritt 840 werden nun für die Dateianhänge 520, 530, 550 und 560 jeweils ein Dateiidentifikationscode 695 berechnet, der eine Zuordnung der entsprechenden Dateianhänge zum Grundgerüst ermöglicht. Der Dateiidentifikationscode ist bevorzugter Weise ein von einem Dateiidentifikationscode-Berechnungs-Modul 475 erzeugter weltweit eindeutiger Referenzcode der herausgelösten Datei, der z.B. aus Parametern wie Dateiname, verwendete Netzwerkkarten-ID, Rechnerhardware, Zeitpunkt der Archivierung, etc. generiert wird.

Gemäß einem Ausführungsbeispiel ist der Zuordnungscode 385 zum Verweis auf die Grundgerüstdatei aus der Verweisdatei ebenfalls ein weltweit eindeutiger Referenzcode, der beispielsweise entsprechend dem Dateiidentifikationscode generiert wird.

In einem nächsten Schritt 850 berechnet das Hashwert-Berechnungs-Modul 470 z.B. mit der Methode Hashcode() einen Hashwert für jede der Dateien 520, 530, 550 und 560. In einem sich anschließenden Schritt 860 wird vom Archiv-Server-Programm 460 oder einem anderen Modul anhand des berechneten Hashwertes überprüft, ob die Datei bereits im Archiv-Server bzw. dessen Speicher 410 vorhanden ist. Ist die Datei noch nicht im Archiv-Server vorhanden, wird zu Schritt 870 verzweigt und die Datei wird neu auf dem Archiv-Server oder einem geeigneten Speicher bzw. File-Server mit ihrem Hashwert und ihrem Dateiidentifikationscode gespeichert. Weiterhin wird in Schritt 875 durch das Referenzzähler-Verwaltungsmodul 480 ein Referenzzähler für die neu gespeicherte Datei mit einem Startwert initialisiert.

Ergibt jedoch die Prüfung, dass eine auf den Archiv-Server verschobene Datei bereits vorhanden ist, wird zu Schritt 880 verzweigt, in dem lediglich der neu berechnete Dateiidentifikationscode für die bereits gespeicherte Datei hinzugefügt und der Referenzzähler dieser Datei in Schritt 885 inkrementiert wird, die Datei jedoch nicht noch einmal auf dem Archiv-Server bzw. dessen Speicher gespeichert wird. Danach wird in Schritt 890 jeweils der Dateiidentifikationscode der Datei als Verweis auf die Datei an das Grundgerüst zurückgegeben. Das Grundgerüst 426 mit den Verweisen 427 wird dann ebenfalls auf dem Archiv-Server bzw. einem geeigneten Speicher 410 gespeichert. Der Zuordnungscode 385 der dem Grundgerüst entsprechenden Verweisdatei 380 auf dem Email-Server wird weiterhin um von einem Zuordnungscode-Berechnungs-Modul 495 erzeugte Parameter, die auf die gespeicherte Grundgerüstdatei verweisen ergänzt. Der Zuordnungscode 385 wird dabei ebenfalls für die spätere Zuordnung als Eintrag 428 in das Grundgerüst eingetragen.

Demgemäß ergeben sich bei Durchführung des erfindungsgemäßen Verfahrens Datenstrukturen, wie sie in Figur 6 dargestellt sind. Für die aus den Figuren 5a bis 5c bekannte Email A.msg sowie die darin enthaltene Email B.msg ist im Speicher des Archiv-Servers bzw. in einer separat gespeicherten Datenbank jeweils ein Grundgerüst 610 bzw. 620 der Emails gespeichert. Im Archiv-Server werden weiterhin Dateien gemäß der Tabelle 650 abgelegt, die beispielsweise in einer ersten Spalte 660 die in den Emails A.msg und B.msg vorhandenen Dateianhänge jeweils als Datei aufführt, in einer zweiten Spalte 670 den dazugehörigen Hashwert zeigt, in einer dritten Spalte 680 den jeweiligen Wert des Referenzzählers für die Dateien angibt und in einer weiteren Spalte 695 die Dateiidentifikationscodes aufnimmt. Nach erfolgter Auslagerung der Email A.msg wird nunmehr auf dem Archiv-Server das A.msg-Grundgerüst 610 mit den Verweisen 640 und Zuordnungscode als Datei bzw. Datensatz z.B. in einer Tabelle 425 gespeichert. Im Archiv-Server bzw. in einer separat gespeicherten Datenbank sind weiterhin die in den Verweisen über die Dateüdentifikationscodes "AD" und "GD" referenzierte Datei D.xls zusammen mit dem Hashwert und dem Referenzzählerwert gleich "2" in einer Zuordnungstabelle 420 gespeichert (Datensatz in Spalte 690). Der Referenzzählerwert "2" besagt, dass die Datei D.xls noch von einer weiteren ausgelagerten Email (G.msg, über den Dateiidentifikationscode "GD") referenziert wird, deren Grundgerüst 630 in Figur 6 dargestellt ist. Tabelle 650 zeigt weiterhin eine Datei Z.txt, deren Referenzzählerwert gleich Null ist und die damit beim nächsten Updaten des Speichers bzw. der Datenbank bzw. durch eine automatische Lösch-Routine gelöscht wird. Insgesamt wird dadurch erreicht, dass stets jede Datei nur einmal auf dem Archiv-Server gespeichert ist und sobald eine Datei nicht mehr von im System verwalteten ausgelagerten Emails referenziert wird, wieder vom Archiv-Server gelöscht wird. Wenn also mehrere Nachrichten mit ihren Bestandteilen bzw. Anhängen gespeichert worden sind, besteht eine n:m Beziehung zwischen den Grundgerüsten der Nachrichten und den aus den Nachrichten herausgelösten Nachrichten und Dateianhängen.

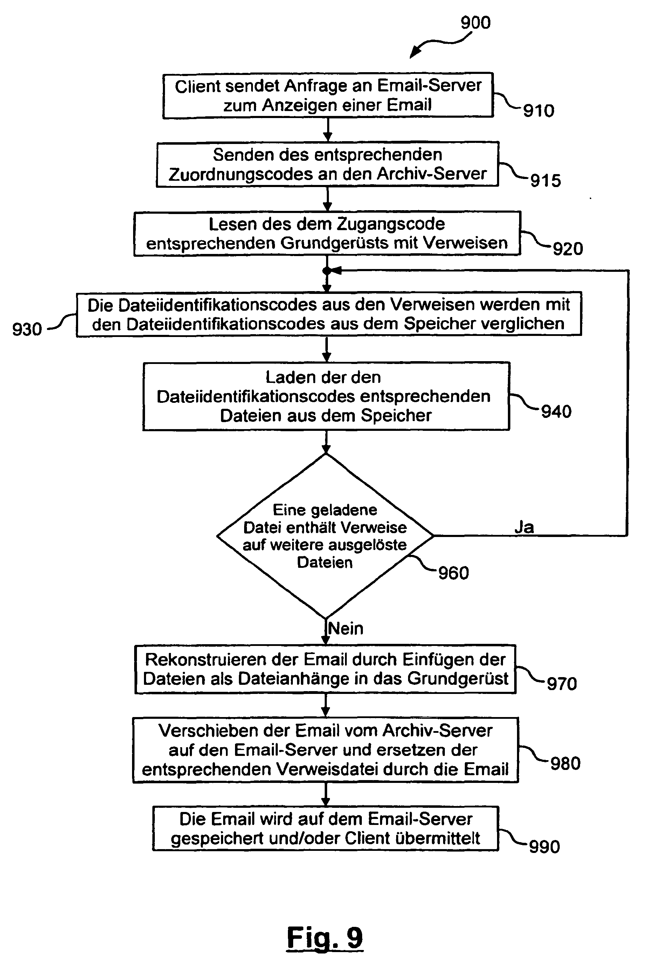

Die Rekonstruktion einer ausgelagerten Email wird mit Bezug auf Figur 9 beschrieben, die ein Ablaufdiagramm eines Verfahrens 900 zum Rekonstruieren von elektronischen Nachrichten darstellt.

Zum Rekonstruieren einer archivierten Email startet ein Benutzer z.B. einen Aufruf zum Anzeigen seiner Email. Gemäß einer Ausführungsform der Erfindung unterscheidet sich dieser Aufruf für den Benutzer nicht vom gewöhnlichen Aufruf einer Email. Der Benutzer wählt dazu mit Hilfe des Eingabegeräts 220 am Nachrichten-Client 200 in der Benutzeroberfläche (GUI) 215 am Bildschirm 210 eine Nachricht aus, die er angezeigt haben möchte und wählt, z.B. durch Doppelklicken auf die Nachricht bzw. Auswählen der Schaltfläche "Anzeigen" in z.B. einem Pull-Down-Menü der GUI des Email-Client-Moduls 260 die Funktion Anzeigen der Email aus. Daraufhin sendet in Schritt 910 der Client eine entsprechende Anfrage an den Email-Server 300 zum Anzeigen der ausgewählten Email. Der Email-Server liest daraufhin in der der Email entsprechenden Verweisdatei 380 den Zuordnungscode 385 aus dem Speicher 310. In einem nächsten Schritt 915 wird der Zuordnungscode an den Archivserver gesandt. Auf dem Archiv-Server 400 wird nun die dem Zuordnungscode entsprechende Email durch das Email-Rekonstruktions-Modul 490 rekonstruiert. Zunächst wird dazu in Schritt 920 das dem Zuordnungscode entsprechende Grundgerüst aus dem Speicher gelesen. Dabei werden die Dateien, auf die in den zu der entsprechenden Grundgerüstdatei gehörenden Verweisen verwiesen wird, sodann geladen und die Verweise durch die geladenen Dateien ersetzt, so dass wiederum eine Email-Datei mit enthaltenen Dateianhängen gebildet wird.

Gemäß einer bevorzugten Ausführungsform werden dazu zunächst in einem Schritt 930 die in den Verweisen enthaltenen Dateiidentifikationswerte mit den in der Zuordnungstabelle 650 in Spalte 695 gespeicherten Dateiidentifikationswerten verglichen. Bei Übereinstimmung wird die entsprechende in Spalte 660 der Tabelle angegebene Datei aus dem Speicher 410 geladen (Schritt 940). Wurde also aus dem Grundgerüst der Email "B.msg" der Dateiidentifikationscode "BE" übergeben, ermittelt das Email-Rekonstruktions-Modul 490 die Datei "E.doc" in Zeile 691 mit dem identischen Dateiidentifikationswert "BE".
In Schritt 960 wird sodann überprüft, ob eine geladene Datei weitere Verweise auf ebenfalls ausgelöste und archivierte Dateien enthält. Dies betrifft sowohl weitere ausgelöste Dateianhänge als auch Verweise auf weitere Grundgerüstdateien, die auf dem Archiv-Server gespeichert sind. Für den Fall, dass eine geladene Datei wiederum Venrveise enthält, wird wieder zu Schritt 930 verzweigt und der Verweis wird wiederum gemäß den vorbeschriebenen Schritten 930 und 940 durch Laden der entsprechenden Datei aufgelöst. Im Beispiel der vorbeschriebenen Email A.msg 510 enthalten die entsprechenden Verweise 640 des A.msg-Grundgerüsts 610 einen Verweis auf die B.msg-Grundgerüstdatei 620. Diese Grundgerüstdatei ist gemäß einem Ausführungsbeispiel ebenfalls auf den Archiv-Server ausgelagert. Die Verweise der B.msg-Grundgerüstdatei 620 werden daraufhin ebenfalls aufgelöst, indem die durch die Dateiidentifikationscodes in den Verweise referenzierten Dateien geladen werden. Wenn alle Verweise in den referenzierten Dateien rekursiv aufgelöst wurden, wird von Schritt 960 zu Schritt 970 verzweigt und es erfolgt die vollständige Rekonstruktion der Email durch Einfügen sämtlicher geladener Dateien als Dateianhänge in die Grundgerüstdatei(en).
In Schritt 980 wird dann die vollständig rekonstruierte Email vom Archiv-Server auf den Email-Server verschoben. Die der Email gemäß übereinstimmendem Zuordnungscode entsprechende und als Platzhalter dienende Verweisdatei wird sodann durch die Email ersetzt. In Schritt 990 wird die Email entweder im Speicher des Email-Servers 300 gespeichert, an den Email-Client 200 übermittelt oder anderweitig verarbeitet.

Gemäß einem Ausführungsbeispiel ist es ebenfalls möglich, dass der Benutzer durch entsprechende Eingaben, z.B. über ein Auswahlmenü, nur bestimmte Dateianhänge in einer Email, z.B. aus Speicherplatzgründen, rekonstruieren lassen möchte und diese im Auswahlmenü auswählt. Vom Email-Rekonstruktions-Modul 490 werden dann nur die Verweise durch die entsprechenden Dateien ersetzt, die vom Benutzer ausgewählt worden sind. Die übrigen Verweise werden nicht aufgelöst und erscheinen in der rekonstruierten Email als Platzhalter für die entsprechenden Dateianhänge. In einem weiteren bevorzugten Auswahlschritt kann der Benutzer dann diese bisher nicht aufgelösten Verweise ebenfalls auflösen und durch die entsprechenden Dateianhänge ersetzen lassen.

In Schritt 980 würde dann die vollständig oder teilweise rekonstruierte Email als Email-Datei auf dem Email-Server z.B. im Posteingang/Postausgang (Mailbox) 320 gespeichert und steht damit für den Aufruf vom Email-Client 200 zur Verfügung. Gemäß einer Ausführungsform wird die rekonstruierte Email nicht erst in der Mailbox 320 des Email-Servers gespeichert, sondern direkt an den aufrufenden Email-Client 200 übermittelt und dort im lokalen Posteingang/Postausgang (Mailbox) 245 gespeichert.

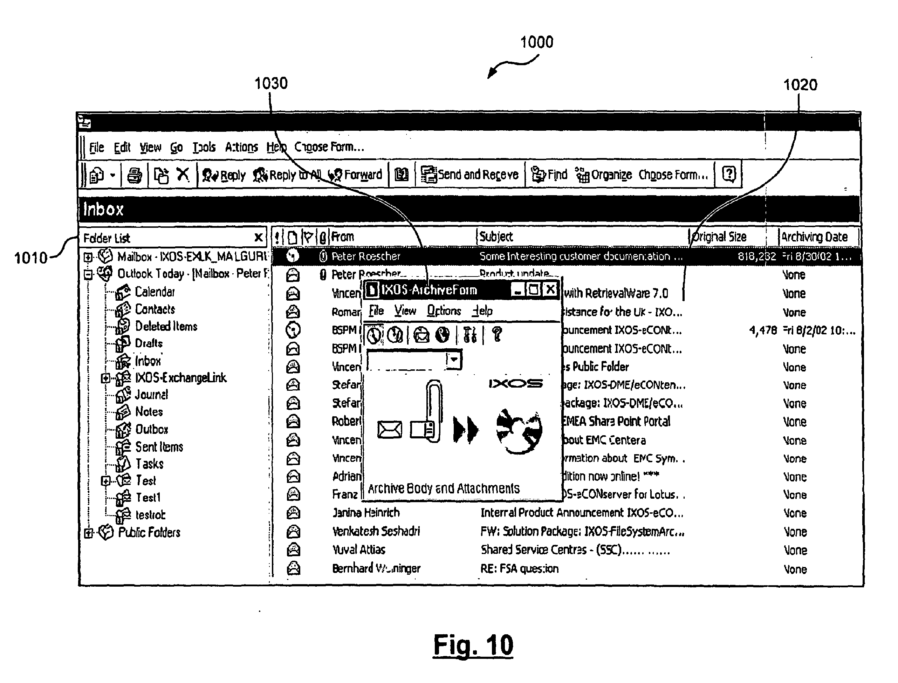

Figur 10 zeigt exemplarisch den Ausschnitt aus einer grafischen Benutzeroberfläche 1000 eines Email-Client-Moduls 260 gemäß der Erfindung, das auf dem Bildschirm 210 zur Anzeige gebracht wird. In der Ordnerliste ("Folder List") 1010 ist der im Fenster 1020 geöffnete Posteingang ("Inbox") mit den z.B. auf dem Archiv-Server gespeicherten Emails, wie z.B: die oberste Email von "Peter Roescher" mit dem Betreff ("Subjekt") "Some Interesting customer documentation.." aufgelistet. Im Fenster Posteingang 1020 sind daher sowohl nicht archivierte als auch archivierte Emails aufgeführt. Nicht archivierte Emails sind dabei durch das vom verwendeten Email-Verwaltungsprogramm, wie z.B. Microsoft Outlook, bekannte Briefkuvert-Symbol gekennzeichnet, wohingegen gemäß der Erfindung archivierte Emails mit einem CD-Symbol gekennzeichnet sind. In einem zusätzlichen Archiv-Fenster 1030 wird das Archivieren von Dateianhängen für den Benutzer visualisiert. Weiterhin können sämtliche Funktionsaufrufe zur Archivierung und anschließenden Rekonstruktion von Emails über die grafische Benutzeroberfläche vom Benutzer gesteuert werden.

Die vom Archiv-Server in Schritt 980 an den Email-Server übermittelten Emails werden bevorzugt zunächst im Arbeitsspeicher 350 als Email 390 mit Dateianhängen 395 zwischengespeichert.

Nach der Übermittlung der rekonstruierten bzw. wiederhergestellten Email wird diese dann vom Arbeitsspeicher 350 bevorzugt in den Arbeitsspeicher 250 des Email-Clients als Email 280 übermittelt, um später z.B. im lokalen Posteingang/Postausgang zur weiteren Bearbeitung gespeichert zu werden.

Wird gemäß einem Ausführungsbeispiel eine archivierte Email durch Eingabe einer entsprechenden Benutzereingabe gelöscht, wird vom Email-Server über z.B: das Email-Notifikationsmodul 370 ein entsprechender Befehl zusammen mit dem in der der Email entsprechenden Verweisdatei enthaltenen Zuordnungscode an den Archiv-Server geleitet. Dort wird das Grundgerüst mit identischem Zuordnungscode gelesen und von alle in der Grundgerüstdatei durch einen Dateiidentifikationscode referenzierten Dateien wird der Referenzzähler dekrementiert. Erreicht dabei ein Referenzzähler den Wert "0" wird die Datei und gegebenenfalls der entsprechende Datensatz in der Zuordnungstabelle 650 gelöscht. Anschließend wird ebenfalls die Grundgerüstdatei gelöscht und eine entsprechende Meldung an den Email-Server zurückgegeben, woraufhin auch die Verweisdatei gelöscht wird.

Das Auftrennen bzw. Auflösen der Email in das Grundgerüst und die enthaltenen Dateianhänge erfolgt gemäß einem Ausführungsbeispiel dadurch, dass zunächst die Email-Datei geöffnet und die enthaltenen Datensätze gelesen werden. Beim Lesen erfolgt ein Parsen der Datensätze auf das Vorhandensein von Dateianhängen anhand typischer Dateistrukturen oder der bekannten Dateisuffixe. Beim Erkennen von in der Email-Datei enthaltenen Dateien werden diese separiert, daher außerhalb der Email-Datei abgespeichert und die Datei in der Email-Datei wird durch einen Verweis auf die ausgelagerte Datei ersetzt. Sind rekursiv alle in der Email-Datei enthaltenen Dateien aufgelöst, d.h. durch Verweise ersetzt, ergibt sich ein Verweisungsbaum, der alle ausgelagerten und ursprünglich innerhalb der Email-Datei als Dateianhänge eventuell mit weiteren Anhängen vorhandenen Dateien als Verweise auf die Dateien als Knoten bzw. Blätter des Baumes enthält. Später, nachdem für jede Datei der Dateiidentifikationscode berechnet wurde, werden die Verweise um diesen Dateiidentifikationscode ergänzt, so dass bei der Rekonstruktion ein eindeutiges Zuordnen der ausgelagerten Dateien gegeben ist. Die verbleibende Email-Datei mit Verweisen wird als Grundgerüst der Email ebenfalls gespeichert.

Gemäß bevorzugter Ausführungsformen der vorliegenden Erfindung sind die hier beschriebenen Verfahren und Systeme zum speichereffizienten Verwalten von elektronischen Nachrichten auf dafür geeigneten Datenverarbeitungsanlagen, wie z.B. Computern, die z.B. in einer Client-Server-Umgebung organisiert sind, implementiert.

Sämtliche sinnvolle Kombinationen von vorliegend geschilderten Merkmalen sind als zur Erfindung gehörig anzusehen, auch wenn sie nicht explizit in ihrem Zusammenspiel beschrieben wurden.

## Patentansprüche

1. Verfahren (800) zum speichereffizienten Verwalten von elektronischen Nachrichten auf einem Archiv-Server, umfassend:
- Zerlegen (825) der Nachricht in ein Grundgerüst und in der Nachricht enthaltene Dateianhänge, wobei die Dateianhänge wiederum Nachrichten und weitere Dateianhänge enthalten können, und diese ebenfalls gemäß dem Verfahren zerlegt werden (830);
- Berechnen (840) eines eindeutigen Dateiidentifikationscodes für jeden Dateianhang;
- Berechnen (850) eines Hashwertes für jeden Dateianhang;
- Prüfen (860) anhand des Hashwertes, ob der Dateianhang bereits als Datei auf dem Archiv-Server gespeichert ist;
- Speichern (870) des Dateianhangs als Datei mit jeweiligem Dateiidentifikationscode und Hashwert, für den keine Datei mit identischem Hashwert auf dem Archiv-Server existiert;
- für den Fall, dass eine Datei mit identischem Hashwert auf dem Archiv-Server existiert: Hinzufügen (880) des Dateiindentifikationscodes des jeweiligen Dateianhangs und Inkrementieren (885) eines Referenzzählers der bereits gespeicherten Datei;
- Zurückgeben (890) der Dateiidentifikationscodes der in der Nachricht enthaltenen Dateianhänge an das Grundgerüst;
- Speichern (895) des Grundgerüsts mit den Dateüdentifikationscodes als Verweise auf die Dateien auf dem Archiv-Server, die den in der Nachricht enthaltenen Dateianhängen entsprechen.

2. Verfahren (800) nach Anspruch 1, wobei in der Nachricht enthaltene Dateianhänge wiederum Nachrichten mit Dateianhängen sind und die Nachricht rekursiv zerlegt wird, bis im Grundgerüst alle Nachrichten und/oder Dateianhänge durch Verweise ersetzt sind.

3. Verfahren (800) nach einem der vorgehenden Ansprüche, wobei die elektronischen Nachrichten Emails mit Dateianhängen sind, die von einem Email-Server versendet und/oder empfangen und auf dem Archiv-Server archiviert werden, wodurch auf dem Email-Server nur jeweils auf die archivierten Emails verweisende Verweisdateien ohne Dateianhänge verbleiben.

4. Verfahren nach einem der vorgehenden Ansprüche, wobei die in der Nachricht neben den Dateianhängen enthaltenen Daten ebenfalls als Datei mit Identifikationscode und Hashwert separat gespeichert sind und das Grundgerüst selbst keine Daten, sondern nur Verweise enthält.

5. Verfahren nach einem der vorhergehenden Ansprüche, wobei auf Anfrage eines Benutzers zum Aufrufen einer verwalteten Nachricht, die folgenden Schritte ausgeführt werden:
- Lesen (920) des Grundgerüsts der Nachricht;
- Laden (940) der Dateien aus dem Speicher, auf die die Verweise im Grundgerüst verweisen;
- Ersetzen (930) der Verweise durch die Dateien als die Dateianhänge der zu rekonstruierenden Nachricht.

6. Verfahren (900) nach Anspruch 5, wobei Verweise auf Dateien verweisen, die wiederum Verweise enthalten und die Verweise rekursiv durch entsprechende Dateien ersetzt werden, bis alle Verweise durch Dateien ersetzt sind (970).

7. Verfahren (900) nach einem der Ansprüche 5 oder 6, wobei das Grundgerüst mit Verweisen vom Archiv-Server gelesen wird (920), wenn eine Anfrage zum Aufrufen der Nachricht an einen Nachrichten-Server gerichtet wird (910), in den Verweisen eindeutige Dateiidentifikationscodes gespeicherte Dateien referenzieren, diese Dateien vom Archiv-Server gelesen werden und die gelesenen Dateien als Dateianhänge in das Grundgerüst eingefügt werden (970), und die rekonstruierte Nachricht auf dem Nachrichten-Server die entsprechende Verweisdatei ersetzt (980).

8. Verfahren (900) nach Anspruch 7, wobei zum Lesen des Grundgerüsts ein Zuordnungscode aus der der Nachricht entsprechenden Verweisdatei an den Archiv-Server übermittelt (915) wird.

9. Verfahren (900) nach einem der Ansprüche 5 bis 8, wobei beim Löschen einer Nachricht die Referenzzähler der in den Verweisen des Grundgerüsts der zu löschenden Nachricht referenzierten Dateien dekrementiert werden.

10. Computerprogramm enthaltend ausführbaren Programmcode, der, wenn er auf einem Computer zur Ausführung gebracht wird, ein Verfahren gemäß einem der Ansprüche 1 bis 9 ausführt.

11. Computerprogrammprodukt, enthaltend ausführbaren Programmcode, der, wenn er auf einem Computer zur Ausführung gebracht wird, ein Verfahren gemäß einem der Ansprüche 1 bis 9 ausführt.

12. System (100) zum speichereffizienten Verwalten von elektronischen Nachrichten, umfassend:
- einen Archiv-Server (140, 400) mit einem ersten Prozessor (430);
- einem ersten Speicher (410);
- einem Nachrichten-Auslagerungs-Modul (485);
- einem Hashwert-Berechnungs-Modul (470);
- ein Dateiidentifikationscode-Berechnungsmodul (475); und
- einem Referenzzähler-Verwaltungs-Modul (480); und
- wobei das Nachrichten-Auslagerungs-Modul eine zu verwaltende Nachricht in ein Grundgerüst und die in der Nachricht enthaltenen Dateianhänge auftrennt, und die Dateianhänge wiederum Nachrichten und weitere Dateianhänge enthalten können, und diese ebenfalls vom System zerlegt werden;
- das Grundgerüst mit Verweisen auf die in der Nachricht enthaltenen Dateianhänge sowie die Dateianhänge jeweils separat im ersten Speicher gespeichert werden;
- das Dateiidentifikationscode-Berechnungsmodul für jeden Dateianhang einen Dateiidentifikationscode (695) berechnet;
- das Haswert-Berechnungs-Modul für jeden Dateianhang einen Hashwert (670) berechnet und, wenn dieser Hashwert bisher noch nicht vergeben wurde, der Dateianhang im ersten Speicher mit dem Dateiidentifikationscode und dem Hashwert gespeichert wird, ansonsten, wenn im ersten Speicher bereits eine Datei mit dem berechneten Hashwert existiert, der Dateianhang nicht erneut als Datei gespeichert, sondern das Referenzzähler-Verwaftungs-Moduf den Referenzzähler (680) der existierenden Datei inkrementiert und zu dieser Datei der weitere Dateiidentifikationscode hinzugefügt, und der Dateiidentifikationscode als Verweis auf die gespeicherte Datei an das Grundgerüst zurückgegeben und mit dem Grundgerüst gespeichert wird.

13. System nach Anspruch 12, wobei der Archiv-Server weiterhin ein Nachrichten-Rekonstruktions-Modul (490) umfaßt, das mit Hilfe des ersten Prozessors auf Anfrage zum Aufrufen einer archivierten Nachricht das entsprechende Grundgerüst mit Verweisen sowie die in den Verweisen referenzierten Dateien vom ersten Speicher liest, im Grundgerüst die Verweise durch die Dateien ersetzt und die so rekonstruierte Nachricht (280) im ersten Speicher speichert und/oder an einen Nachrichten-Server oder -Client versendet.

14. System nach einem der Ansprüche 12 oder 13 mit einem Nachrichten-Server (130, 300) umfassend einen zweiten Prozessor (340) und einen zweiten Speicher (310), wobei die zu verwaltende Nachricht zunächst im zweiten Speicher gespeichert ist, auf den Archiv-Server verschoben und im ersten Speicher durch eine Verweisdatei mit einem Zuordnungscode ersetzt wird, und der Zuordnungscode auf das Grundgerüst im ersten Speicher der Nachricht verweist.

15. System nach einem der Ansprüche 12 bis 14 mit einem Nachrichten-Client (110, 120, 200) umfassend einen dritten Prozessor (230), einen dritten Speicher (240), einen Bildschirm (210), zumindest ein Eingabegerät (220) und ein Nachrichten-Client-Modul (260), wobei es einem Benutzer mit Hilfe des Eingabegeräts über das Nachrichten-Client-Modul in Zusammenwirkung mit dem dritten Prozessor ermöglicht wird, Nachrichten vom Nachrichten-Server in einer Benutzeroberfläche (215) des Nachrichten-Client-Moduls am Bildschirm aufzurufen, am Bildschirm darzustellen sowie speichereffizient auf dem Archiv-Server zu speichern.

## Claims

1. Method (800) for the storage-efficient management of electronic messages on an archive server, comprising:
- decomposition (825) of the message into a basic structure and file attachments contained in the message, wherein the file attachments may, in turn, contain messages and further file attachments, and said latter messages and file attachments are likewise decomposed (830) according to the method;
- calculation (840) of a unique file identification code for each file attachment;
- calculation (850) of a hash value for each file attachment;
- checking (860), on the basis of the hash value, as to whether the file attachment is already stored as a file on the archive server;
- storage (870) of the file attachment as a file with a respective file identification code and hash value for which no file with an identical hash value exists on the archive server;
- if a file with an identical hash value exists on the archive server: addition (880) of the file identification code of the respective file attachment and incrementing (885) of a reference counter of the already stored file;
- return (890), to the basic structure, of the file identification codes of the file attachments contained in the message;
- storage (895) of the basic structure with the file identification codes as references to the files on the archive server, which references correspond to the file attachments contained in the message.

2. Method (800) according to claim 1, wherein file attachments contained in the message are, in turn, messages with file attachments, and the message is recursively decomposed until all messages and/or file attachments are replaced in the basic structure by references.

3. Method (800) according to any one of the preceding claims, wherein the electronic messages are emails with file attachments which are sent and/or received by an email server and archived on the archive server, as a result of which only reference files, without file attachments, which respectively refer to the archived emails, remain on the email server.

4. Method according to any one of the preceding claims, wherein the data contained in the message in addition to the file attachments are likewise stored separately, as a file with an identification code and has value, and the basic structure itself contains no data, but only references.

5. Method according to any one of the preceding claims, wherein, upon request by a user to call up a managed message, the following steps are executed:
- reading (920) of the basic structure of the message;
- retrieving (940) from the storage those files to which the references in the basic structure refer;
- replacing (930) the references by the files as the file attachments of the message to be reconstructed.

6. Method (900) according to claim 5, wherein references refer to files which, in turn, contain references, and the references are recursively replaced by corresponding files, until all references are replaced (970) by files.

7. Method (900) according to either of claims 5 or 6, wherein the basic structure with references is read (920) by the archive server when a request to call-up the message is directed (910) to a message server, in the references unique file identification codes reference stored files, these files are read by the archive server and the read files are inserted (970) as file attachments into the basic structure, and the reconstructed message replaces (980) the corresponding reference file on the message server.

8. Method (900) according to claim 7, wherein, for the purpose of reading the basic structure, an assignment code is transferred (915) to the archive server out of the reference file corresponding to the message.

9. Method (900) according to any one of claims 5 to 8, wherein, upon deletion of a message, the reference counters of the files referenced in the references of the basic structure of the message to be deleted are decremented.

10. Computer program containing executable program code which, when executed on a computer, executes a method according to any one of claims 1 to 9.

11. Computer program product, containing executable program code which, when executed on a computer, executes a method according to any one of Claims 1 to 9.

12. System (100) for the storage-efficient management of electronic messages, comprising:
- an archive server (140, 400), comprising: a first processor (430);
- a first storage (410);
- a message swapping-out module (485);
- a hash-value calculation module (470);
- a file identification code calculation module (475); and
- a reference counter management module (480); and
- wherein the message swapping-out module divides a message that is to be managed into a basic structure and the file attachments contained in the message, and the file attachments may, in turn, contain messages and further file attachments, and said latter messages and file attachments are likewise decomposed by the system;
- both the basic structure, with references to the file attachments contained in the message, and the file attachments are in each case stored separately in the first storage;
- the file identification code calculation module calculates a file identification code (695) for each file attachment;
- the hash-value calculation module calculates a hash value (670) for each file attachment and, if this hash value has not hitherto been assigned, the file attachment is stored in the first storage with the file identification code and hash value, otherwise, if a file having the calculated hash value already exists in the first storage, the file attachment is not stored over again as a file, but the reference counter management module increments the reference counter (680) of the existing file and adds to said file the further file identification code, and the file identification code is returned to the basic structure as a reference to the stored file and is stored with the basic structure.

13. System according to claim 12, wherein the archive server additionally comprises a message reconstruction module (490) which, by means of the first processor, upon a request for calling-up of an archived message, reads both the corresponding basic structure, with references, and the files referenced in the references, from the first storage, in the basic structure replaces the references by the files and stores the thus reconstructed message (280) in the first storage and/or sends it to a message server or message client.

14. System according to either of claims 12 or 13, having a message server (130, 300) comprising a second processor (340) and a second storage (310), wherein the message that is to be managed is first stored in the second storage, transferred to the archive server and replaced in the first storage by a reference file having an assignment code, and the assignment code refers to the message basic structure in the first storage.

15. System according to any one of claims 12 to 14, having a message client (110, 120, 200) comprising a third processor (230), a third storage (240), a display screen (210), at least one input device (220) and a message client module (260), wherein a user is enabled, by means of the input device and through the message client module in combination with the third processor, to call up messages from the message server, in a user interface (215) of the message client module on the display screen, to display said messages on the screen and store them in a storage-efficient manner on the archive server.

## Revendications

1. Procédé (800) de gestion, efficace en terme d'espace mémoire, de messages électroniques sur un serveur d'archivage, comprenant :
- la décomposition (825) du message en une structure de base et en fichiers attachés contenus dans le message, les fichiers attachés pouvant à leur tour contenir des messages et d'autres fichiers attachés et ceux-ci étant également décomposés (830) selon le procédé ;
- le calcul (840) d'un code univoque d'identification de fichier pour chaque fichier attaché ;
- le calcul (850) d'une valeur de hash pour chaque fichier attaché ;
- la vérification (860) à l'aide de la valeur de hash pour savoir si le fichier attaché est déjà enregistré comme fichier sur le serveur d'archivage ;
- l'enregistrement (870) du fichier attaché comme fichier avec code respectif d'identification de fichier et valeur de hash, pour lequel aucun fichier avec une valeur de hash identique n'existe sur le serveur d'archivage ;
- et au cas où un fichier avec une valeur de hash identique existe sur le serveur d'archivage : ajout (880) du code d'identification de fichier du fichier attaché respectif et incrémentation (885) d'un compteur de référence du fichier déjà enregistré ;
- restitution (890) du code d'identification de fichier des fichiers attachés contenus dans le message à la structure de base ;
- enregistrement (895) de la structure de base avec les codes d'identification de fichier comme pointeurs vers des fichiers sur le serveur d'archivage, correspondant aux fichiers attachés contenus dans le message.

2. Procédé (800) selon la revendication 1, dans lequel les fichiers attachés contenus dans le message sont eux-mêmes à leur tour des messages avec des fichiers attachés, le message étant décomposé de manière récursive jusqu'à ce que tous les messages et/ou fichiers attachés soient remplacés par des pointeurs dans la structure de base.

3. Procédé (800) selon l'une des revendications précédentes, dans lequel les messages électroniques sont des e-mails avec des fichiers attachés, qui sont envoyés et/ou reçus par un serveur d'e-mail et archivés sur le serveur d'archivage, en raison de quoi seuls des fichiers de pointeurs renvoyant respectivement aux e-mails archivés restent sans fichiers attachés sur le serveur d'e-mail.

4. Procédé selon l'une des revendications précédentes, dans lequel les données contenues dans le message outre les fichiers attachés sont également enregistrées séparément comme fichier avec code d'identification et valeur de hash, la structure de base ne contenant elle-même aucune donnée mais uniquement des pointeurs.

5. Procédé selon l'une des revendications précédentes, dans lequel sur requête d'un utilisateur pour récupérer un message, les étapes suivantes sont effectuées :
- lecture (920) de la structure de base du message ;
- chargement (940) des fichiers à partir de la mémoire à laquelle les pointeurs dans la structure de base renvoient ;
- remplacement (930) des pointeurs par les fichiers comme fichiers attachés du message à reconstruire.

6. Procédé (900) selon la revendication 5, dans lequel les pointeurs renvoient à des fichiers qui à leur tour contiennent des pointeurs, les pointeurs étant remplacés de manière récursive par des fichiers correspondants jusqu'à ce que tous les pointeurs soient remplacés par des fichiers (970).

7. Procédé (900) selon l'une des revendications 5 ou 6, dans lequel la structure de base avec pointeurs est lue (920) par le serveur d'archivage lorsqu'une requête pour récupérer un message est adressée (910) à un serveur de messagerie, les pointeurs comprenant des codes univoques d'identification des fichiers enregistrés, les fichiers étant lus par le serveur d'archivage et les fichiers lus étant insérés (970) comme fichiers attachés dans la structure de base, le message ainsi reconstruit remplaçant (980) le fichier de pointeurs correspondant sur le serveur de messagerie.

8. Procédé (900) selon la revendication 7, dans lequel, pour lire la structure de base, un code d'attribution est transmis (915) au serveur d'archivage depuis le fichier de pointeurs correspondant au message.

9. Procédé (900) selon l'une des revendications 5 à 8, dans lequel, lors de la suppression d'un message, les compteurs de référence des fichiers référencés par les pointeurs de la structure de base du message à supprimer sont décrémentés.

10. Programme informatique contenant un code de programme exécutable qui, lorsqu'il est installé sur un ordinateur en vue d'être exécuté, met en oeuvre un procédé selon l'une des revendications 1 à 9.

11. Support de programme informatique, contenant un code de programme exécutable qui, lorsqu'il est installé sur un ordinateur en vue d'être exécuté, met en oeuvre un procédé selon l'une des revendications 1 à 9.

12. Système (100) de gestion de messages électroniques efficace en terme d'espace mémoire, comprenant :
- un serveur d'archivage (140, 400) avec un premier processeur (430) ;
- une première mémoire (410) ;
- un module de transfert des messages (485) ;
- un module de calcul de valeur de hash (470) ;
- un module de calcul d'un code d'identification de fichier (475) ; dans lequel
- un module de gestion de compteur de référence (480) ; dans lequel :
- le module de transfert des messages décompose un message à gérer en une structure de base et en fichiers attachés contenus dans le message, les fichiers attachés pouvant à leur tour contenir des messages et d'autres fichiers attachés et ceux-ci étant également décomposés par le système ;
- la structure de base avec pointeurs vers les fichiers attachés contenus dans le message, et les fichiers attachés sont séparément enregistrés dans la première mémoire ;
- le module de calcul du code d'identification de fichier calcule un code d'identification de fichier (695) pour chaque fichier attaché ;
- le module de calcul de valeur de hash calcule une valeur de hash (670) pour chaque fichier attaché et, lorsque cette valeur de hash n'a pas encore été attribuée, le fichier attaché est enregistré dans la première mémoire avec le code d'identification de fichier ainsi que la valeur de hash,
- et dans le cas contraire, lorsqu'un fichier existe déjà dans la première mémoire avec la valeur de hash calculée, le fichier attaché n'est pas enregistré de nouveau comme fichier mais le module de gestion du compteur de référence incrémente le compteur de référence (680) du fichier existant et l'ajoute au code d'identification de fichier, le code d'identification de fichier étant restitué à la structure de base comme pointeur vers le fichier enregistré et étant enregistré avec la structure de base.

13. Système selon la revendication 12, le serveur d'archivage comprenant encore un module de reconstruction de message (490) lequel à l'aide du premier processeur, sur requête pour récupérer un message archivé, lit à partir d'une première mémoire la structure de base correspondante avec pointeurs ainsi que les fichiers référencés par les pointeurs, remplace dans la structure de base les pointeurs par lesdits fichiers et enregistre le message ainsi reconstruit (280) dans la première mémoire et/ou l'envoie à un serveur de messagerie ou un client de messagerie.

14. Système selon l'une des revendications 12 ou 13 équipé d'un serveur de messagerie (130, 300), comprenant un second processeur (340) et une seconde mémoire (310), dans lequel le message à gérer est dans un premier temps enregistré dans la seconde mémoire, transféré sur le serveur de messagerie et remplacé dans la première mémoire par un fichier de pointeurs avec un code d'attribution, le code d'attribution renvoyant à la structure de base enregistrée dans la première mémoire.

15. Système selon l'une des revendications 12 à 14 équipé d'un client de messagerie (110, 120, 200), comprenant un troisième processeur (230), une troisième mémoire (240), un écran (210), au moins une unité d'entrée (220) et un module de client de messagerie (260), permettant à un utilisateur à l'aide de l'unité d'entrée via ledit module de client de messagerie, avec le concours dudit troisième processeur, d'appeler des messages à l'écran depuis le serveur de messagerie sur une interface utilisateur (215) dudit module de client de messagerie, de les afficher à l'écran et de les enregistrer de manière efficace en terme d'espace mémoire sur le serveur d'archivage.
